# EUROPEAN PATENT APPLICATION

(11) **EP 4 831 734 A1**
(43) Date of publication of application: **28.10.2026**
(21) Application number: 24907826.2
(22) Date of filing: 21.11.2024
(51) Int. Cl.: G03B 9/06, G03B 5/00, H04N 23/54, H04N 23/55, G03B 30/00

(54) **APERTURE DEVICE, CAMERA DEVICE, AND OPTICAL DEVICE**

(30) Priority: 20.12.2023 KR 20230187705; 23.08.2024 KR 20240113202
(71) Applicant: LG Innotek Co., Ltd., Seoul 07796 (KR)
(72) Inventor: KIM, Hoon, Seoul 07796 (KR); YU, Hyun Soo, Seoul 07796 (KR); BAE, Seok, Seoul 07796 (KR)
(74) Representative: Plasseraud IP
(86) International application number: PCT/KR2024/018563
(87) International publication number: WO 2025/135541

(57) **Abstract**

An aperture device according to the present embodiment comprises: a fixed assembly including a first driving part; a moving assembly including a second driving part; a blade part coupled to the fixed assembly and the moving assembly; a ball disposed between the fixed assembly and the moving assembly; and a sensor disposed on the fixed assembly, wherein the sensor overlaps the second driving part in a direction perpendicular to an optical axis direction.

## Description

### [Technical Field]

The present embodiment relates to an aperture device, a camera device, and an optical device.

### [Background Art]

Recent smartphones are equipped with a camera function capable of capturing high-resolution photos and videos.

In particular, recent smartphone cameras are provided with various functions such as an auto-focus function, an image stabilization function, and a zoom function, thereby providing high satisfaction to many users.

However, a conventional smartphone camera has a problem in that performance is limited in a dark environment. Due to this, there is a problem in that images captured under low illumination conditions have high noise and low sharpness.

### [Detailed Description of the Invention]

### [Technical Subject]

The present invention aims to provide a camera device that can be used without performance limitations even in a dark environment. In addition, the present invention aims to provide an aperture device provided in the aforementioned camera device.

### [Technical Solution]

To solve the technical subject, an aperture device according to an embodiment of the present invention comprises: a fixed assembly including a first driving part; a moving assembly including a second driving part; a blade part coupled to the fixed assembly and the moving assembly; a ball disposed between the fixed assembly and the moving assembly; and a sensor disposed on the fixed assembly, wherein the sensor overlaps the second driving part in a direction perpendicular to an optical axis direction.

The fixed assembly may include a housing on which the blade part is disposed, and a substrate disposed on the housing, wherein the housing may include a first extension part extending from an edge in one direction, and a second extension part extending from the first extension part in the optical axis direction.

The substrate may include a third extension part extending from an opening in one direction, and a fourth extension part extending from the third extension part in the optical axis direction, wherein the sensor may be disposed on the fourth extension part of the substrate.

The third extension part of the substrate may be disposed on the first extension part of the housing, and the fourth extension part of the substrate may be disposed on the second extension part of the housing.

The first driving part may include a coil, and the second driving part may include a magnet.

The first driving part may include a plurality of coils spaced apart from each other, and the fixed assembly may include a substrate electrically connecting the plurality of coils.

The substrate may include a plurality of seating parts corresponding to respective edge shapes of the plurality of coils, and the substrate may include a plurality of wing parts extending from an opening in a radial direction.

On each of the plurality of wing parts of the substrate, a pattern coil electrically connecting the plurality of coils may be disposed.

The fixed assembly may include a substrate on which the sensor is disposed, and a first cover member disposed on the fixed assembly and the moving assembly, wherein the first cover member may include a recessed part recessed in one direction in a side plate so that the substrate passes therethrough.

The first cover member may include an escape part recessed in another direction in the side plate to face the sensor.

The recessed part and the escape part of the first cover member may overlap in the optical axis direction.

A first guide member disposed inside the first cover member may be included, wherein the first guide member may include a first guide groove in which the ball is disposed.

The fixed assembly may include a second guide member disposed under the first guide member, wherein the second guide member may include a second guide groove in which the ball is disposed.

The moving assembly may include a plurality of magnets and a magnet support member on which the plurality of magnets are spaced apart and disposed, wherein a third guide groove in which the ball is disposed may be included on an outer surface of the magnet support member.

The fixed assembly may include a housing on which the blade part is disposed, wherein the housing may include a first protrusion inserted into a first hole of the blade part, and the magnet support member may include a second protrusion inserted into a second hole of the blade part.

The blade part may include six blades, wherein three blades among the six blades may be disposed on a first layer, and the remaining three blades may be disposed on a second layer below the first layer.

To solve the technical subject, a camera device according to an embodiment of the present invention comprises: a printed circuit board; an image sensor disposed on the printed circuit board; a lens disposed on the image sensor; and an aperture device disposed on the lens.

To solve the technical subject, an optical instrument according to an embodiment of the present invention comprises: a main body; the camera device according to the embodiment disposed on the main body; and a display disposed on the main body and outputting at least one of an image and a video captured by the camera device.

### [Advantageous Effects]

According to the present embodiment, a camera function of a smartphone can be used without performance limitation even in a dark environment.

In addition, an ultra-thin rotor can be implemented through a magnet injection structure, and generation of cracks can be prevented, thereby increasing reliability.

In addition, a sensing precision and a sensing linearity of a sensor can be implemented by securing a separation distance between the sensor and a magnet in an ultra-thin aperture device.

### [Brief Description of Drawings]

FIG. 1 is a perspective view of an aperture device according to the present embodiment.
FIG. 2 is a perspective view of an aperture device according to the present embodiment, viewed from another angle.
FIG. 3 is an exploded perspective view of an aperture device according to the present embodiment.
FIG. 4 is an exploded perspective view of an aperture device according to the present embodiment.
FIG. 5 is a cross-sectional view of an aperture device according to the present embodiment.
FIG. 6 is a perspective view of a first cover member and a first guide member according to the present embodiment.
FIG. 7 is a perspective view of a first cover member and first and second guide members according to the present embodiment.
FIG. 8 is an enlarged cross-sectional view of region A of FIG. 7.
FIG. 9 is an exploded perspective view of a fixed assembly according to the present embodiment.
FIG. 10 is a perspective view of a fixed assembly according to the present embodiment.
FIG. 11 is an exploded perspective view of a moving assembly according to the present embodiment.
FIG. 12 is a perspective view of a magnet support member according to the present embodiment.
FIG. 13 is a perspective view of a magnet support member according to the present embodiment, as viewed from another angle.
FIG. 14 is a perspective view of a blade part according to the present embodiment.
FIG. 15 is a perspective view illustrating a blade part according to the present embodiment separated into two layers.
FIG. 16 is a perspective view in which a fixed assembly, a blade part, and a magnet according to the present embodiment are coupled.
FIG. 17 is a perspective view of a camera device according to the present embodiment.
FIG. 18 is a perspective view of an optical device according to the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' to each other with another component interposed therebetween.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as an optical axis direction of a lens coupled to a lens drive device and/or an image sensor.

A 'vertical direction' used hereinafter may be a direction parallel to or the same as the optical axis direction. The vertical direction may correspond to a 'z-axis direction'. A 'horizontal direction' used hereinafter may be a direction perpendicular to the vertical direction. That is, the horizontal direction may be a direction perpendicular to the optical axis. Accordingly, the horizontal direction may include an 'x-axis direction' and a 'y-axis direction'.

An 'auto-focus (AF) function' used hereinafter is defined as a function of automatically focusing on a subject by moving a lens in the optical axis direction according to a distance of the subject to adjust a distance from an image sensor so that a clear image of the subject can be obtained on the image sensor. In addition, 'closed-loop auto focus (CLAF) control' is defined as feedback-controlling a position of the lens in real time by sensing a distance between the image sensor and the lens in order to improve accuracy of focus adjustment.

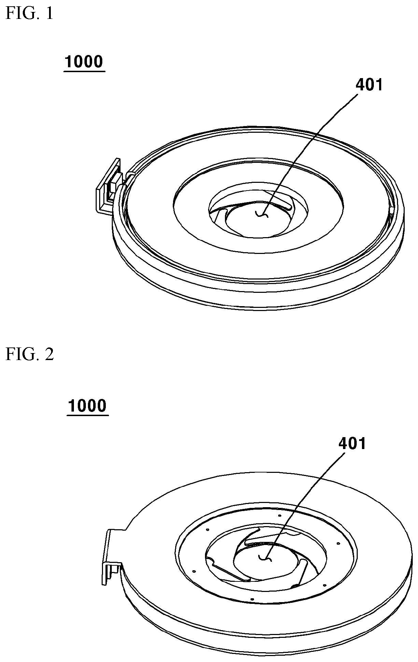

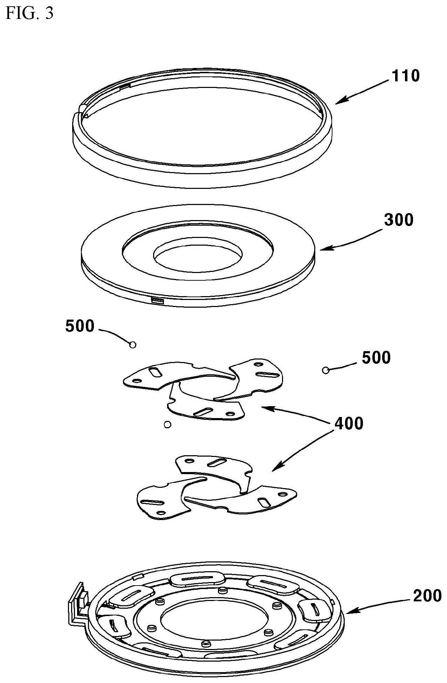

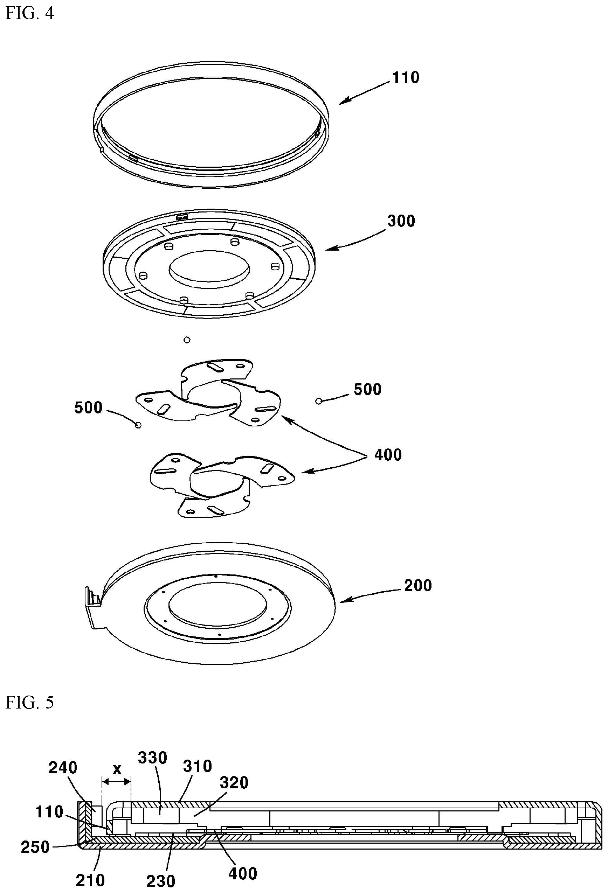

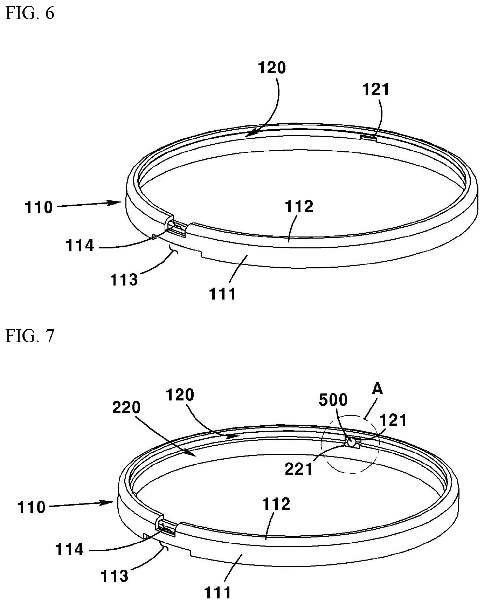

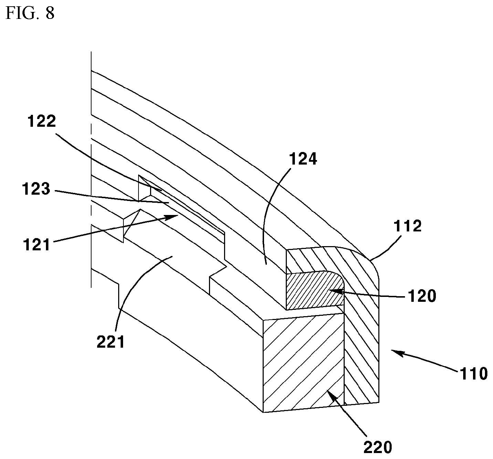

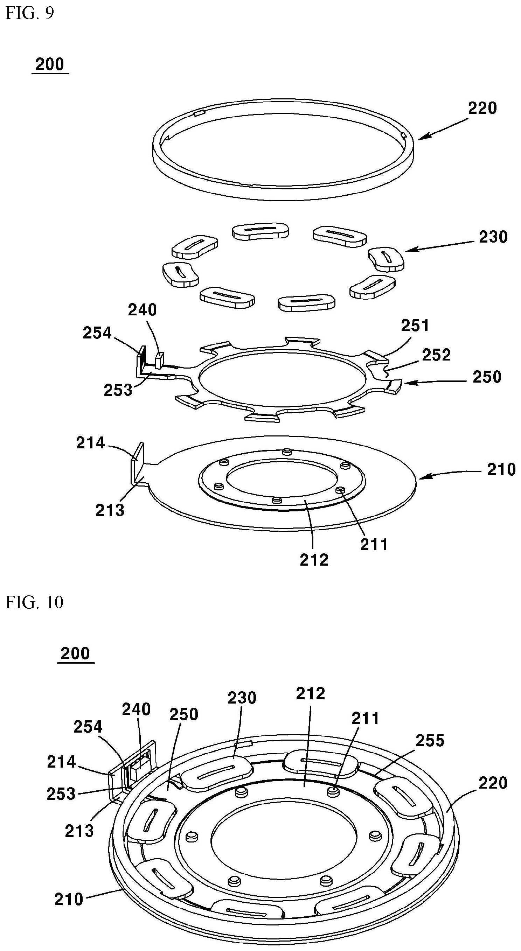

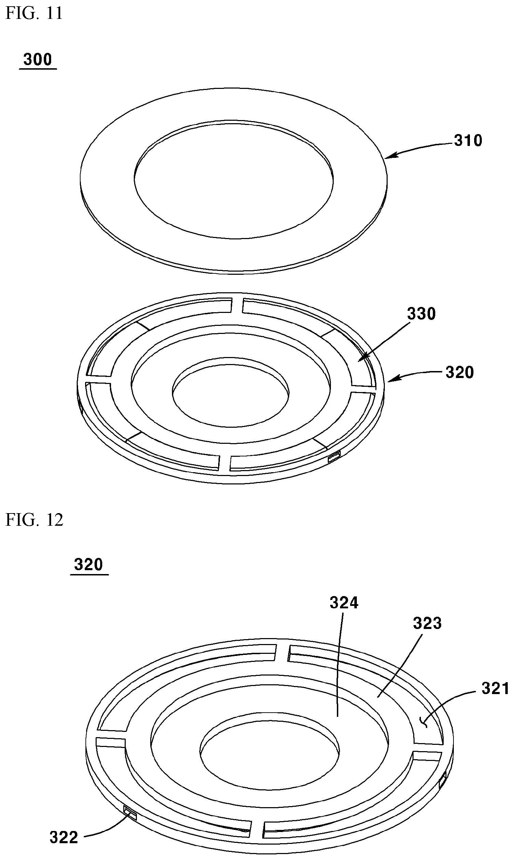

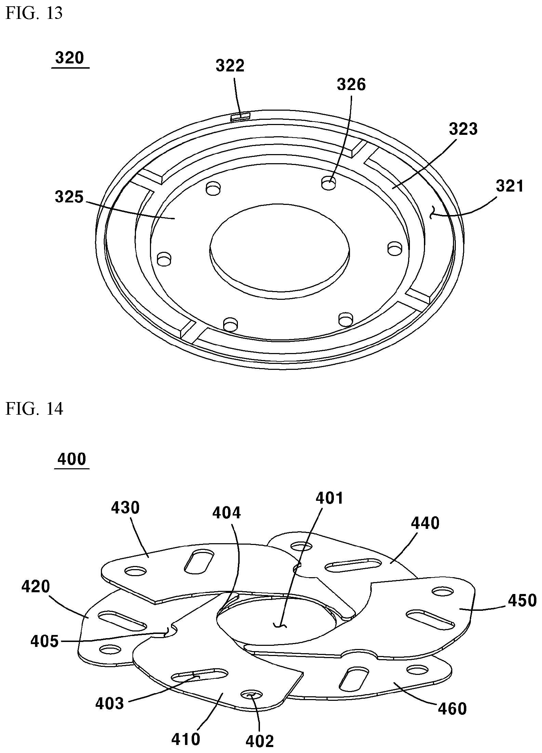

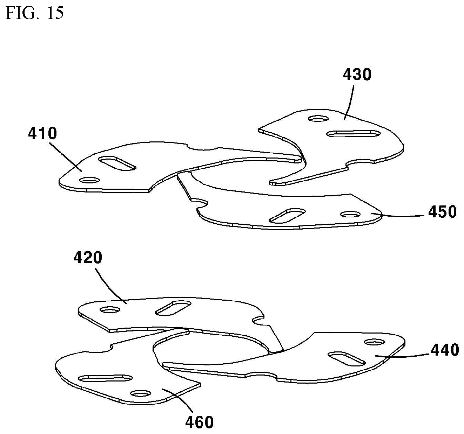

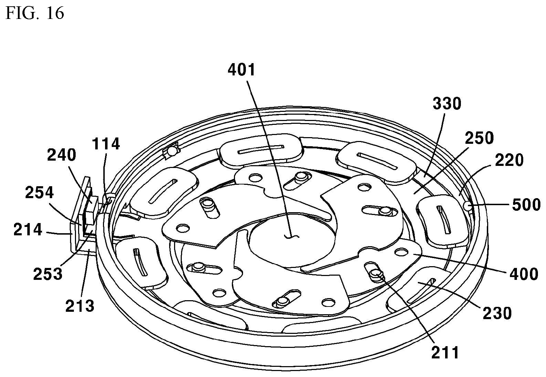

FIG. 1 is a perspective view of an aperture device according to the present embodiment; FIG. 2 is a perspective view of an aperture device according to the present embodiment, viewed from another angle; FIG. 3 is an exploded perspective view of an aperture device according to the present embodiment; FIG. 4 is an exploded perspective view of an aperture device according to the present embodiment; FIG. 5 is a cross-sectional view of an aperture device according to the present embodiment; FIG. 6 is a perspective view of a first cover member and a first guide member according to the present embodiment; FIG. 7 is a perspective view of a first cover member and first and second guide members according to the present embodiment; FIG. 8 is an enlarged cross-sectional view of region A of FIG. 7; FIG. 9 is an exploded perspective view of a fixed assembly according to the present embodiment; FIG. 10 is a perspective view of a fixed assembly according to the present embodiment; FIG. 11 is an exploded perspective view of a moving assembly according to the present embodiment; FIG. 12 is a perspective view of a magnet support member according to the present embodiment; FIG. 13 is a perspective view of a magnet support member according to the present embodiment, viewed from another angle; FIG. 14 is a perspective view of a blade part according to the present embodiment; FIG. 15 is a perspective view of a blade part separated into two layers according to the present embodiment; and FIG. 16 is a perspective view in which a fixed assembly, a blade part, and a magnet are coupled according to the present embodiment.

The aperture device **1000** may be an aperture. The aperture device **1000** may adjust an amount of light passing through a lens. The aperture device **1000** may adjust an amount of light incident on an image sensor **75**. The aperture device **1000** may control a size of a hole through which light passes.

The aperture device **1000** may be disposed in a lens. The aperture device **1000** may be disposed on a lens. The aperture device **1000** may be coupled to a lens. The aperture device **1000** may be fixed to a lens. The aperture device **1000** may move integrally with a lens. The aperture device **1000** may move together with a lens. The aperture device **1000** may move together with a lens in the optical axis direction.

The aperture device **1000** may include a fixed assembly **200**. The fixed assembly **200** may be a stator. The fixed assembly **200** may be a part that is relatively fixed with respect to the moving assembly **300**. The fixed assembly **200** may movably support the moving assembly **300**.

The aperture device **1000** may include a moving assembly **300**. The moving assembly **300** may be a rotor. The moving assembly **300** may be a rotating body. The moving assembly **300** may be a movable part. The moving assembly **300** may be a mover. The moving assembly **300** may be a carrier.

The moving assembly **300** may be disposed on the fixed assembly **200**. The moving assembly **300** may be movably disposed on the fixed assembly **200**. The moving assembly **300** may be rotatably disposed on the fixed assembly **200**. The moving assembly **300** may move the blade part **400**. The moving assembly **300** may move together with the blade part **400**.

The first cover member **110** may include a side plate **111** and a curved part **112** extending from the side plate **111**. The first cover member **110** may be disposed on the fixed assembly **200**. The first cover member **110** may be disposed on the moving assembly **300**.

The first cover member **110** may include a recessed part **113** recessed in one direction in the side plate **111**. The recessed part **113** may be a region through which the substrate **250** passes in order for the substrate **250** to be connected to the outside of the aperture device **1000**. The recessed part **113** may be a region through which the first extension part **213** of the housing **210** and the third extension part **253** of the substrate **250** pass. The recessed part **113** may be recessed in a shape corresponding to a shape of the substrate **250**. The recessed part **113** may be recessed in a shape corresponding to the third extension part **253** of the substrate **250**. The recessed part **113** may be recessed in a shape corresponding to the first extension part **213** of the housing **210**. In the first cover member **110**, the curved part **112** may be formed in one direction of the side plate **111**, and the recessed part **113** may be formed in another direction of the side plate **111**. In the first cover member **110**, the curved part **112** may be formed on an upper side of the side plate **111**, and the recessed part **113** may be formed on a lower side of the side plate **111**.

The first cover member **110** may include an escape part **114** recessed in another direction in the side plate **111**. The escape part **114** may be formed on the curved part **112** of the first cover member **110**. The escape part **114** may overlap the recessed part **113** in the optical axis direction. The escape part **114** may be disposed to face the sensor **240**. The escape part **114** may overlap the sensor **240** in a direction perpendicular to the optical axis.

Through the escape part **114**, the sensor **240** may be disposed to face the first guide member **120** or the second guide member **220** instead of facing the first cover member **110**. The escape part **114** may be an opened region for the sensor **240** to effectively detect magnetic flux generated by electromagnetic interaction between the magnet **330** and the coil **230**.

The aperture device **1000** may include a first guide member **120** disposed on the first cover member **110**. The first guide member **120** may be disposed on an inner surface of the first cover member **110**. The first guide member **120** may be disposed inside the first cover member **110** between the curved part **112** and the side plate **111**. The first guide member **120** may be fixed to the inner surface of the first cover member **110** with an adhesive. The first guide member **120** may be in a ring shape including an opening.

The first guide member **120** may include a first guide groove **121**. The first guide groove **121** may be formed on one surface of the first guide member **120**. The first guide groove **121** may include a plurality of first guide grooves **121** disposed spaced apart from each other. The first guide groove **121** may be recessed in an inner peripheral surface **124** of the first guide member **120**. The first guide groove **121** may include a first surface **122** forming an inclination with the inner peripheral surface **124** of the first guide member **120**, and a second surface **123** connected to the first surface **122** and parallel to the inner peripheral surface **124**. The first guide groove **121** may include both side surfaces connected to the first surface **122** and the second surface **123** and connected to the inner peripheral surface **124**.

The fixed assembly **200** may include a housing **210**. The housing **210** may be in a plate shape. The housing **210** may be in a ring shape including an opening. The housing **210** may be disposed under the substrate **250**. The housing **210** may be disposed under the second guide member **220**. The housing **210** may be disposed under the first cover member **110**. The housing **210** may be disposed under the moving assembly **300**. The housing **210** may be shield-coated. Through this, magnetic flux generated from the magnet **330** can be concentrated in a direction of the coil **230**, and magnetic flux leakage can be prevented.

One surface of the housing **210** may include a plurality of first protrusions **211** spaced apart from each other. The plurality of first protrusions **211** may be formed spaced apart from each other along a circumferential direction. The plurality of first protrusions **211** may be disposed closer to the opening than an outer surface of the housing **210**. The plurality of first protrusions **211** may be formed spaced apart from each other at equal intervals on an upper surface of the housing **210**. A first hole **403** of the blade part **400** may be inserted into each of the plurality of first protrusions **211**. The first hole **403** of the blade part **400** may be formed larger than the plurality of first protrusions **211**.

One surface of the housing **210** may include a protruding part **212** protruding from a region connected to the opening. The first protrusion **211** of the housing **210** may be formed on the protruding part **212**. An outer surface of the protruding part **212** may face an inner peripheral surface of the substrate **250**. A diameter of the protruding part **212** may be equal to a diameter of the opening of the substrate **250**. The protruding part **212** may support the blade part **400** coupled to the first protrusion **211** to rotate in a flat state.

The housing **210** may include a first extension part **213** extending in one direction, and a second extension part **214** extending from the first extension part **213** in a vertical direction. The first extension part **213** may extend from an edge of the housing **210** in one direction. The first extension part **213** may extend from the edge of the housing **210** in a radial direction. The first extension part **213** may extend in an outward direction of a region where the second guide member **220** is disposed. The second extension part **214** may extend from the first extension part **213** in the optical axis direction.

The fixed assembly **200** may include a substrate **250**. The substrate **250** may be disposed on the housing **210**. The substrate **250** may be disposed between the housing **210** and the coil **230**. The substrate **250** may include a wing part **251** disposed between coils spaced apart from each other. The wing part **251** may extend from an opening of the substrate **250** in a radial direction. The substrate **250** may include a seating part **252** between the wing parts **251**. One surface of the seating part **252** may correspond to a shape of an edge of the coil **230**. One surface of the seating part **252** may be disposed to face the edge of the coil **230**.

On the wing part **251**, a pattern coil may be disposed along a circumferential direction. The pattern coil disposed on the wing part **251** may be connected to the coil **230** disposed on the seating part **252**. When a plurality of coils **230** are respectively disposed on a plurality of seating parts **252** spaced apart from each other, the plurality of coils **230** may be connected to each other by being coupled with the pattern coil disposed on the wing part **251**.

The substrate **250** may include a third extension part **253** extending in one direction, and a fourth extension part **254** extending from the third extension part **253** in a vertical direction. The third extension part **253** may extend from an opening of the substrate **250**. The fourth extension part **254** may extend from an edge of the wing part **251** in one direction. The fourth extension part **254** may extend from the edge of the wing part **251** in a radial direction. The third extension part **253** may extend in an outward direction of a region where the second guide member **220** is disposed on the substrate **250**. The fourth extension part **254** may extend from the third extension part **253** in the optical axis direction.

The third extension part **253** of the substrate **250** may be disposed on the first extension part **213** of the housing **210**. The third extension part **253** of the substrate **250** may overlap the first extension part **213** of the housing **210** in the optical axis direction. The fourth extension part **254** of the substrate **250** may be disposed on the second extension part **214** of the housing **210**. The fourth extension part **254** of the substrate **250** may overlap the second extension part **214** of the housing **210** in a direction perpendicular to the optical axis direction.

The substrate **250** may be connected to any one of the plurality of coils **230**. The substrate **250** may be a flexible printed circuit board (FPCB). The substrate **250** may apply electricity to the coil **230** and the sensor **240** through an external power supply device of the aperture device **1000**.

The fixed assembly **200** may include a first driving part **230**. The first driving part **230** may be a coil **230**. The coil **230** may include a plurality of coils **230** spaced apart from each other. The coil **230** may be in a ring shape. The coil **230** may be an FP coil. The coil **230** may be disposed on the housing **210**. The plurality of coils **230** may be connected to each other by a fine wire. The plurality of coils **230** spaced apart from each other may be respectively disposed on the seating part **252** of the substrate **250**. The plurality of coils **230** spaced apart from each other may be disposed between the wing parts **251** spaced apart from each other.

The fixed assembly **200** may include a sensor **240** disposed on the substrate **250**. The sensor **240** may be disposed on a substrate **250**. The sensor **240** may be disposed on the fourth extension part **254** of the substrate **250**. The sensor **240** may be electrically connected to the substrate **250**. The sensor **240** may detect the magnet **330**. The sensor **240** may be a Hall sensor. The sensor **240** may be an MR sensor. The sensor **240** may detect a magnetic force of the magnet **330**.

The sensor **240** may be disposed at a position corresponding to the magnet **330**. The sensor **240** may overlap the magnet **330** in a direction perpendicular to the optical axis direction. Control of the blade part **400** can be fed back in real time through the position of the magnet **330** detected by the sensor **240**. That is, the blade part **400** can be controlled with real-time feedback by the sensor **240**.

A distance **X** between one surface of the sensor **240** and one surface of the magnet **330** in a direction perpendicular to the optical axis may satisfy a range of about 0.5 mm to about 1 mm. When the distance **X** between one surface of the sensor **240** and one surface of the magnet **330** in the direction perpendicular to the optical axis is less than 0.5 mm, magnetic flux is sensed too strongly, so that a sensing linearity of the sensor is not obtained, causing difficulty in detecting a position of the magnet **330**. When the distance **X** between one surface of the sensor **240** and one surface of the magnet **330** in the direction perpendicular to the optical axis is greater than 1 mm, magnetic flux is sensed too weakly, so that there is difficulty for the sensor **240** to detect the position of the magnet **330**.

A pattern coil may be disposed on the third extension part **253** and the fourth extension part **254** of the substrate **250**. A coil fine wire may be disposed on the third extension part **253** and the fourth extension part **254** of the substrate **250**. The pattern coil disposed on the third extension part **253** and the fourth extension part **254** of the substrate **250** may be connected to the pattern coil disposed on the wing part **251**. The sensor **240** may receive electricity by being coupled with the pattern coil disposed on the fourth extension part **254** of the substrate **250**.

The fixed assembly **200** may include a second guide member **220**. The aperture device **1000** may include a second guide member **220** disposed on the first cover member **110**. The second guide member **220** may be disposed on the fixed assembly **200**. The second guide member **220** may be disposed on the housing **210**.

The second guide member **220** may be disposed on an inner surface of the first cover member **110**. The second guide member **220** may be disposed at a lower end of the first guide member **120**. The second guide member **220** may be disposed spaced apart from the first guide member **120**. The second guide member **220** may be coupled to the first guide member **120**.

An upper surface of the second guide member **220** may be disposed to face a lower surface of the first guide member **120**. The second guide member **220** may be fixed to the inner surface of the first cover member **110** with an adhesive. The second guide member **220** may be fixed to the housing **210** with an adhesive. The second guide member **220** may be in a ring shape including an opening.

The second guide member **220** may include a second guide groove **221**. The second guide groove **221** may be formed on one surface of the second guide member **220**. The second guide groove **221** may include a plurality of second guide grooves **221** disposed spaced apart from each other. The second guide groove **221** may be formed at a position facing the first guide groove **121**. The second guide groove **221** may be formed as an inclined surface connecting an upper surface and an inner peripheral surface of the second guide member **220**. The second guide groove **221** may include both side surfaces connecting the inclined surface, the upper surface, and the inner peripheral surface.

A ball **500** may be disposed in the first guide groove **121** and the second guide groove **221**. The first guide groove **121** and the second guide groove **221** may face a third guide groove **322** of a magnet support member **320**. The first guide groove **121** of the first guide member **120**, the second guide groove **221** of the second guide member **220**, and the third guide groove **322** of the magnet support member **320** may form a space in which the ball **500** is disposed. The first guide groove **121**, the second guide groove **221**, and the third guide groove **322** may support rotation of the ball **500**.

The moving assembly **300** may be in a ring shape. The moving assembly **300** may be in a shape including an opening. The moving assembly **300** may include a third driving part **330**. The third driving part **330** may be a magnet **330**. The moving assembly **300** may include a second cover member **310**, a magnet support member **320**, and a magnet **330**.

The second cover member **310** may be disposed on the magnet support member **320**. The second cover member **310** may be in a ring shape including an opening. The second cover member **310** may be disposed to cover the magnet **330** disposed on the magnet support member **320**. The magnet support member **320** may be shield-coated. Through this, magnetic flux generated from the magnet **330** can be concentrated in a direction of the coil **230**, and magnetic flux leakage can be prevented.

The magnet support member **320** may be in a ring shape including an opening. The magnet support member **320** may include a support plate **323** connected to the opening. The support plate **323** may include a recessed part **324** recessed in one surface connected to the opening. The support plate **323** may include a protruding part **325** on another surface connected to the opening. The recessed part **324** may be formed on an upper surface of the support plate **323**, and the protruding part **325** may be formed on a lower surface of the support plate **323**. The recessed part **324** of the support plate **323** can reduce a thickness in a region adjacent to the opening of the aperture device **1000**. When coupled with the blade part **400**, the protruding part **325** of the support plate **323** can reduce a separation distance from the housing **210** of the fixed assembly **200**, thereby preventing tilting of the blade part **400**.

The lower surface of the magnet support member **320** may include a plurality of second protrusions **326** spaced apart from each other. The plurality of second protrusions **326** may be formed on the protruding part **325** of the support plate **323**. The plurality of second protrusions **326** may be formed spaced apart from each other along a circumferential direction. The plurality of second protrusions **326** may be formed spaced apart from each other at equal intervals on the lower surface of the magnet support member **320**. The number of the plurality of second protrusions **326** may be formed according to the number of the blade parts **400**. A second hole **142** of the blade part **400** may be inserted into each of the plurality of second protrusions **326**. The second hole **402** of the blade part **400** may be formed larger than the second protrusion **326** of the moving assembly **300**.

The magnet support member **320** may include a magnet hole **321** to which the magnet **330** is coupled. The magnet hole **321** may include a plurality of magnet holes **321** spaced apart from each other along a circumferential direction. The plurality of magnet holes **321** may include four magnet holes **321**. The magnet hole **321** may have a shape corresponding to a shape of the magnet **330**.

The magnet **330** may be in an arc shape. The magnet **330** may be coupled to the magnet hole **321**. The magnet **330** may include four 2-pole magnetized magnets. The magnet **330** may include an N-pole and an S-pole. The magnet **330** may be magnetized with two polarities along the circumferential direction. When the magnet is implemented as a single ring, it may be broken by an external impact or during a polarity magnetization process; therefore, the magnet **330** may be formed in an arc shape and disposed along the circumferential direction on the magnet support member **320**.

A filleted surface may be formed in a corner region of the magnet **330**. A curvature may be formed in the corner region of the magnet **330**. The magnet **330** may be disposed in the magnet hole **321** and fixed with an adhesive. Since the curvature is formed in the corner region of the magnet **330**, a space in which the adhesive is disposed may be formed between the magnet hole **321** and the magnet **330**. The magnet **330** and the magnet support member **320** may be insert-molded. Insert molding is a type of plastic injection molding process, in which a component is placed in an injection mold in advance, and then plastic is injected thereon to produce an integrated product.

A third guide groove **322** may be formed on an outer surface of the magnet support member **320**. A ball **500** may be disposed in the third guide groove **322**. The third guide groove **322** may face a first guide groove **121** of a first guide member **120** and a second guide groove **221** of a second guide member **220**. The third guide groove **322**, the first guide groove **121** of the first guide member **120**, and the second guide groove **221** of the second guide member **220** may form a space in which the ball **500** is disposed. The ball **500** may be disposed in the space formed by the first to third guide grooves **121**, **221**, and **322** to guide rotation of the magnet support member **320**.

The aperture device **1000** may include a blade part **400**. The blade part **400** may be a member for blocking light. The blade part **400** may be a light blocking member. The blade part **400** may be disposed on the fixed assembly **200**. The blade part **400** may be disposed on the housing **210** of the fixed assembly **200**. The blade part **400** may be disposed on the moving assembly **300**. The blade part **400** may be disposed on the magnet support member **320**. The blade part **400** may move together with the moving assembly **300**. That is, when the moving assembly **300** moves, the blade part **400** may also move together.

The blade part **400** may include a first hole **403** into which the first protrusion **211** of the fixed assembly **200** is inserted. The blade part **400** may include a first hole **403** into which the first protrusion **211** of the housing **210** is inserted. The blade part **400** may include a second hole **402** into which the second protrusion **326** of the moving assembly **300** is inserted. The blade part **400** may include a second hole **402** into which the second protrusion **326** of the magnet support member **320** is inserted. The first hole **403** may be formed larger than the second hole **402**. The first hole **403** may be formed in an elliptical shape, and the second hole **402** may be formed in a circular shape.

When the moving assembly **300** moves, the blade part **400** may pivot with respect to the fixed assembly **200**. The blade part **400** may perform rotational and linear movement at a portion meeting the fixed assembly **200**. The blade part **400** may perform linear movement at a portion meeting the moving assembly **300**.

The blade part **400** may include an escape groove **405** on a surface connected to an inner peripheral surface of the blade part **400**. The escape groove **405** may be a region for avoiding the second protrusion **326** of the magnet support member **320**. A radius of curvature of the escape groove **405** may be greater than a radius of curvature of the second protrusion **326** of the magnet support member **320**. Through the escape groove **405**, the blade part **400** can prevent contact and collision with the second protrusion **326**, thereby increasing a rotation radius of the blade part **400** and reducing a size of a minimum opening of a blade hole **401** formed by the blade part **400**.

As an overlapping area of a plurality of blades increases, a distance between an escape groove **405** of one blade among adjacently disposed blades and a second hole **402** of the remaining blade may decrease. As the overlapping area of the plurality of blades increases, a distance between the escape groove **405** of one blade among the adjacently disposed blades and a second protrusion **326** coupled with the remaining blade may decrease.

For example, a first blade **410** and a sixth blade **460** may overlap each other, and as the overlapping area of the plurality of blades increases, a distance between an escape groove **405** of the first blade **410** and a second hole **402** of the sixth blade **460** may decrease. As the overlapping area of the plurality of blades increases, a distance between the escape groove **405** of the first blade **410** and a second protrusion **326** coupled to the second hole **402** of the sixth blade **460** may decrease.

The aperture device **1000** may include a hole **401**. The blade part **400** may include a hole **401** formed by a plurality of blade parts **400**. A size or a shape of the hole **401** may be changed by the plurality of blade parts **400**. Light may pass through the hole **401**.

The blade part **400** may include a plurality of blades. The blade part **400** may include first to sixth blades **410**, **420**, **430**, **440**, **450**, and **460**. The first to sixth blades **410**, **420**, **430**, **440**, **450**, and **460** may have the same shape. At least one region of the plurality of blades may be disposed to overlap in the optical axis direction. The plurality of blades may form a hole **401** whose size varies according to movement of the moving assembly **300**. As an overlapping area of the plurality of blades increases, the size of the hole **401** may decrease. As the overlapping area of the plurality of blades decreases, the size of the hole **401** may increase. The hole **401** may be formed by inner peripheral surfaces **404** of the plurality of blades.

The plurality of blades may be separately disposed in two layers. The first to sixth blades **410**, **420**, **430**, **440**, **450**, and **460** may be separately disposed in two layers. The first blade **410**, the third blade **430**, and the fifth blade **450** may be disposed on the same plane as one layer. The second blade **420**, the fourth blade **440**, and the sixth blade **460** may be disposed on the same plane as one layer. The plurality of blades may be disposed in two layers, the first blade **410**, the third blade **430**, and the fifth blade **450** may be disposed on an upper layer among the two layers, and the second blade **420**, the fourth blade **440**, and the sixth blade **460** may be disposed on a lower layer.

The first blade **410**, the third blade **430**, and the fifth blade **450** may not overlap each other by rotation of the magnet support member **320**. In a state where an opening formed by the first blade **410**, the third blade **430**, and the fifth blade **450** is minimum, the first blade **410**, the third blade **430**, and the fifth blade **450** may not overlap in the optical axis direction.

The second blade **420**, the fourth blade **440**, and the sixth blade **460** may not overlap each other by rotation of the magnet support member **320**. In a state where an opening formed by the second blade **420**, the fourth blade **440**, and the sixth blade **460** is minimum, the second blade **420**, the fourth blade **440**, and the sixth blade **460** may not overlap in the optical axis direction.

The blade part **400** may include an inner peripheral surface **404**. The inner peripheral surface **404** may form a hole **401** through which light passes. The blade part **400** may include an inner peripheral surface **404** forming a hole **401**. The inner peripheral surface **404** may be an inner side surface. The inner peripheral surface **404** may be an inner surface. The inner peripheral surface **404** of the blade part **400** may include a plurality of arc regions and an interpolation region formed between each of the plurality of arc regions.

When a current is applied to the coil of the aperture device 1000, the blade part 400 may move. That is, when the moving assembly 300 moves by applying a current to the coil of the aperture device 1000, a shape of the hole 401 formed by the blade part 400 may be changed. In other words, an F-number of the aperture device 1000 can be changed by applying a current to the coil.

Hereinafter, a configuration of a camera device according to the present embodiment will be described with reference to the drawings.

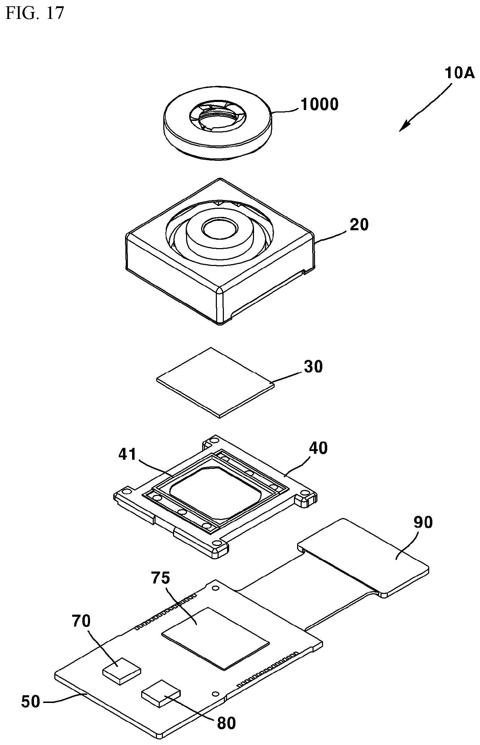

FIG. 17 is a perspective view of the camera device according to the present embodiment.

The camera device **10** may include a lens module. The lens module may include at least one lens. The lens may be disposed at a position corresponding to an image sensor **75**. The lens module may include a lens and a lens barrel. The lens module may be coupled to a holder of a lens driving apparatus **20**. The lens module may be coupled to the holder by screw coupling and/or an adhesive. The lens module may move integrally with the holder.

The camera device **10** may include a filter **30**. The filter **30** may serve to block light of a specific frequency band from being incident on the image sensor **75** in light passing through the lens module. The filter **30** may be disposed to be parallel to the x-y plane. The filter **30** may be disposed between the lens module and the image sensor **75**. The filter **30** may be disposed on a sensor base **40**. As a modification, the filter **30** may be disposed on a base of the lens driving apparatus **20**. The filter **30** may include an infrared filter. The infrared filter can block light in an infrared region from being incident on the image sensor **75**.

The camera device **10** may include the sensor base **40**. The sensor base **40** may be disposed between the lens driving apparatus **20** and a printed circuit board **50**. The sensor base **40** may include a protruding part **41** on which the filter **30** is disposed. An opening may be formed in a portion of the sensor base **40** where the filter **30** is disposed so that the light passing through the filter **30** can be incident on the image sensor **75**.

The camera device **10** may include a printed circuit board (PCB) **50**. The printed circuit board **50** may be a substrate or a circuit board. The lens driving apparatus **20** may be disposed on the printed circuit board **50**. The sensor base **40** may be disposed between the printed circuit board **50** and the lens driving apparatus **20**. The printed circuit board **50** may be electrically connected to the lens driving apparatus **20**. An image sensor **75** may be disposed on the printed circuit board **50**. Various circuits, elements, controllers, and the like may be provided on the printed circuit board **50** to convert an image formed on the image sensor **75** into an electrical signal and transmit it to an external device.

The camera device **10** may include an image sensor **75**. The image sensor **75** may have a configuration in which light passing through a lens and the filter **30** is incident to form an image. The image sensor **75** may be mounted on the printed circuit board **50**. The image sensor **75** may be electrically connected to the printed circuit board **50**. As an example, the image sensor **75** may be coupled to the printed circuit board **50** by surface mounting technology (SMT). As another example, the image sensor **75** may be coupled to the printed circuit board **50** by flip chip technology.

The image sensor **75** may be disposed such that an optical axis thereof coincides with the lens. That is, the optical axis of the image sensor **75** and the optical axis of the lens may be aligned. The image sensor **75** can convert light irradiated onto an effective image area of the image sensor **75** into an electrical signal. The image sensor **75** may be any one of a charge coupled device (CCD), a metal oxide semi-conductor (MOS), a CPD, and a CID.

The camera device **10** may include a motion sensor **70**. The motion sensor **70** may be mounted on the printed circuit board **50**. The motion sensor **70** may be electrically connected to a controller **80** through a circuit pattern provided on the printed circuit board **50**. The motion sensor **70** can output rotational angular velocity information caused by movement of the camera device **10**. The motion sensor **70** may include a 2-axis or 3-axis gyro sensor, or an angular velocity sensor.

The camera device **10** may include the controller **80**. The controller **80** may be disposed on the printed circuit board **50**. The controller **80** may be electrically connected to a coil of the lens driving apparatus **20**. The controller **80** can individually control a direction, an intensity, an amplitude, and the like of a current supplied to the coil. The controller **80** can control the lens driving apparatus **20** to perform an auto-focusing function and/or a handshake correction function. Furthermore, the controller **80** can perform auto-focusing feedback control and/or handshake correction feedback control for the lens driving apparatus **20**.

The camera device **10** may include a connector **90**. The connector **90** may be electrically connected to the printed circuit board **50**. The connector **90** may include a port for being electrically connected to an external device.

Hereinafter, a configuration of an optical device according to the present embodiment will be described with reference to the drawings.

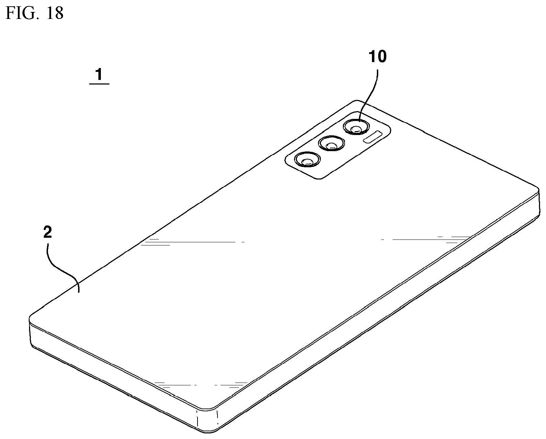

FIG. 18 is a perspective view of the optical device according to the present embodiment.

The optical device **1** may include any one or more of a cellular phone, a mobile phone, a mobile terminal, a smart phone, a smart pad, a portable smart device, a digital camera, a laptop computer, a digital broadcasting terminal, a personal digital assistant (PDA), a portable multimedia player (PMP), and a navigation system. The optical device **1** may include any device for capturing an image or a photograph.

The optical device **1** may include a main body **2**. The optical device **1** may include a camera device **10**. The camera device **10** may be disposed on the main body **2**. The camera device **10** can capture an image of a subject. The optical device **1** may include a display. The display may be disposed on the main body **2**. The display can output any one or more of a video and an image captured by the camera device **10**. The display may be disposed on a first surface of the main body **2**. The camera device **10** may be disposed on any one or more of the first surface of the main body **2** and a second surface opposite to the first surface. The camera device **10** may include a triple camera disposed in a vertical direction. Alternatively, the camera device **10** may include a triple camera disposed in a horizontal direction.

Those of ordinary skill in the technical field related to the present embodiment will be able to understand that the present invention may be implemented in a modified form without departing from the essential characteristics of the above-described description. Therefore, the disclosed methods should be considered from an illustrative perspective rather than a restrictive perspective. The scope of the present invention is shown in the claims rather than the foregoing description, and all differences within the equivalent scope should be interpreted as being included in the present invention.

## Claims

1. An aperture device comprising:
a fixed assembly including a first driving part;
a moving assembly including a second driving part;
a blade part coupled with the fixed assembly and the moving assembly;
a ball disposed between the fixed assembly and the moving assembly; and
a sensor disposed on the fixed assembly,
wherein the sensor overlaps the second driving part in a direction perpendicular to an optical axis direction.

2. The aperture device according to claim 1,
wherein the fixed assembly includes a housing on which the blade part is disposed and a substrate disposed on the housing, and
wherein the housing includes a first extension part extending from an edge in one direction and a second extension part extending from the first extension part in an optical axis direction.

3. The aperture device according to claim 2,
wherein the substrate includes a third extension part extending from an opening in one direction and a fourth extension part extending from the third extension part in an optical axis direction, and
wherein the sensor is disposed on the fourth extension part of the substrate.

4. The aperture device according to claim 3,
wherein the third extension part of the substrate is disposed on the first extension part of the housing, and
wherein the fourth extension part of the substrate is disposed on the second extension part of the housing.

5. The aperture device according to claim 1,
wherein the first driving part includes a coil, and
wherein the second driving part includes a magnet.

6. The aperture device according to claim 1,
wherein the first driving part includes a plurality of coils spaced apart from each other, and
wherein the fixed assembly includes a substrate electrically connecting the plurality of coils.

7. The aperture device according to claim 6,
wherein the substrate includes a plurality of seating parts corresponding to a shape of each edge of the plurality of coils, and
wherein the substrate includes a plurality of wing parts extending from an opening in a radial direction.

8. The aperture device according to claim 7,
wherein a pattern coil electrically connecting the plurality of coils is disposed on each of the plurality of wing parts of the substrate.

9. The aperture device according to claim 1,
wherein the fixed assembly includes a substrate on which the sensor is disposed,
wherein the aperture device includes a first cover member disposed on the fixed assembly and the moving assembly, and
wherein the first cover member includes a recessed part recessed in one direction in a side plate so that the substrate passes therethrough.

10. The aperture device according to claim 9,
wherein the first cover member includes an escape part recessed in another direction in the side plate to face the sensor.
